**Europäisches Patentamt**

**European Patent Office**

**Office européen des brevets**

(19)

(11) Veröffentlichungsnummer : **0 046 444**
**B1**

# (12) EUROPÄISCHE PATENTSCHRIFT

(45) Veröffentlichungstag der Patentschrift :
**13.06.84**

(21) Anmeldenummer : **81810318.6**

(22) Anmeldetag : **10.08.81**

(51) Int. Cl.³ : **B 32 B 15/08**

(54) **Metall-Kunststoffverbundfolie.**

(30) Priorität : 18.08.80 CH 6207/80

(43) Veröffentlichungstag der Anmeldung :
24.02.82 Patentblatt 82/08

(45) Bekanntmachung des Hinweises auf die Patenterteilung : 13.06.84 Patentblatt 84/24

(84) Benannte Vertragsstaaten :
**CH DE FR GB IT LI**

(56) Entgegenhaltungen :
EP-A- 0 019 835
DE-A- 1 704 505
DE-A- 2 348 931
DE-A- 2 726 605
FR-A- 1 349 511

(73) Patentinhaber : **SCHWEIZERISCHE ALUMINIUM AG**
**CH-3965 Chippis (CH)**

(72) Erfinder : **Festag, Werner**
**Klausweg 31**
**CH-8200 Schaffhausen (CH)**
Erfinder : **Müller, Hans-Ueli**
**Stalden 8**
**CH-8224 Löhningen (CH)**
Erfinder : **Breitler, Hanspeter**
**Schützenstrasse 19**
**CH-8280 Kreuzlingen (CH)**
Erfinder : **Bolliger, Max**
**Rosengartenstrasse 22a**
**CH-8280 Kreuzlingen (CH)**

EP 0 046 444 B1

## Beschreibung

Die Erfindung betrifft ein Verfahren zur Herstellung einer Metall-Kunststoffverbundfolie, insbesondere mit Deckschichten aus einem Aluminium-Dünnband wie sie im Oberbegriff des Anspruches 1 beschrieben ist sowie eine nach dem Verfahren hergestellte Verbundfolie.

Bekannt ist beispielsweise ein Metall-Kunststoff-Triplex-Verbund mit einer Kunststoffkernschicht und mit beidseitig angeordneten Deckschichten aus einer Metall-Folie sowie ein Verfahren zur Herstellung einer Al-Kunststoffverbundfolie gemäss der CH-PS 601 016, welche mindestens eine auf einer Seite einer Al-Folie aufkaschierte Kunststoffolie aufweist, und welche insbesondere zur Herstellung von verschliessbaren Behältern für empfindliche Füllgüter, wie Lebensmittel, Pharmazeutika, Chemikalien und dergleichen mehr dienen soll, zu deren Schutz vor Licht, Sauerstoff, Wasserdampf, Aromaverlust und Fremdaroma.

Das letztgenannte Verfahren zur Herstellung der Al-Kunststoffverbundfolie ist dadurch gekennzeichnet, dass eine Al-Folie mit mindestens einer Kunststoffolie, deren Reissdehnung 80-180 % beträgt und deren Kraftaufnahme bei Dehnung der Verbundfolie grösser ist als die Kraftaufnahme der Al-Folie, mittels einer haftvermittelnden, eine Scherfestigkeit von mindestens 0,3 N/mm² erreichenden Zwischenschicht kraftschlüssig verbunden wird.

Ausserdem ist es bekannt, für die Herstellung von zweischichtigen Al-Kunststoff-Laminaten verstreckte Kunststoffolien, wie beispielsweise biaxial orientierte Polypropylen-Folien zu verwenden. Aus solchen Laminaten hergestellte Behälterteile können in Kombination mit entsprechenden Laminaten aus unverstreckten Kunststoffolien zu Packungen gesiegelt werden deren Siegelnähte leicht aufgeschält werden können, so dass die Packung ohne zusätzliche Hilfsmittel aufgerissen werden kann.

Da für Metall-Kunststoff-Laminate mit guter Tiefziehfähigkeit nur relativ weiche Metall-Dünnbänder geeignet sind, können solche Packungen bei der Handhabung in der Produktion und bei der Distribution leicht beschädigt werden. — Dieses Problem stellt sich insbesondere bei grossvolumigen Leichtbehältern für Flüssigkeiten, bei welchen die Deckschichten des Metall-Kunststoffverbundes jeweils aus einem Aluminium-Dünnband bestehen.

Um der Beschädigung solcher, ein Füllgewicht bis zu 30 kg aufweisender Behälter vorzubeugen, hat sich nunmehr die Verwendung einer Metall-Kunststoffverbundfolie als zweckdienlich erwiesen, welche im Grundaufbau als sogenannter Triplex-Verbund eine Kunststoff-Kernschicht mit beidseitig derselben angeordneten Deckschichten aus jeweils einem Metall-Dünnband aufweist. — Der Anwendung eines Triplex-Verbundes der vorbezeichneten Art für die Fertigung von verhältnismässig grossvolumigen Behältern waren bisher jedoch wegen der unbefriedigenden Tiefzieheigenschaften solcher Verbundfolien sehr enge Grenzen gesetzt.

Der Erfindung liegt nunmehr die Aufgabe zugrunde, eine Verbundfolie zu schaffen, welche im Grundaufbau als sogenannter Triplex-Verbund eine Kunststoff-Kernschicht mit beidseitig derselben angeordneten Metall-Dünnbändern aufweist, welche insbesondere der Fertigung von halbstarren Leichtbehältern mit einem Füllgewicht bis zu ca. 30 kg im Kaltformverfahren durch Tiefziehen oder Tiefen dient, und wobei aus solchen Verbundfolien gebildete Behälter besonders widerstandsfähig gegen Bruch und Leckage sind und im bekannten Siegelverfahren geschlossen bzw. zusammengefügt werden können.

Erfindungsgemäss wird die Aufgabe durch eine Metall/Kunststoff-Verbundfolie mit einer Kernschicht aus verstrecktem Kunststoff sowie beidseits auf diese unter Bildung einer Zwischenschicht kaschierten Schichten aus jeweils einem Metall-Dünnband zur Herstellung von durch bekannte Siegelverfahren verschliess- bzw. zusammenflügbaren grossvolumigen Lichtbehältern durch Tiefziehen oder Tiefen gelöst, welche dadurch gekennzeichnet ist, dass die plastisch verformbare, verstreckte bzw. orientierte Kernschicht eine Reissdehnung von 40 bis 180 % aufweist, die beidseits der Kernschicht vorgesehenen Zwischenschichten jeweils mit einer Scherfestigkeit von mindestens 0,3 N/mm² versehen sind, und dass die Kraftaufnahme der Kernschicht bei Dehnung der Verbundfolie grösser ist als die Kraftaufnahme jedes der auf sie flächig aufgebrachten Metall-Dünnbänder.

Weitere vorteilhafte Merkmale Verbundfolie sind aus der nachfolgenden Beschreibung zu entnehmen.

Die Zeichnung zeigt Ausführungsbeispiele des Erfindungsgegenstandes in vereinfachter Darstellungsweise, und zwar:

Figur 1 den Aufbau einer Verbundfolie gemäss einem ersten Ausführungsbeispiel, aus welchem der Grundaufbau der Verbundfolie im sogenannten Triplex-Verbund zu ersehen ist,

Figur 2 den Aufbau einer Verbundfolie gemäss einem zweiten Ausführungsbeispiel, aus welchem ein auf einer Seite mit einem Lack oder mit einer thermoplastischen Kunststoffolie beschichteter Triplex-Verbund zu ersehen ist und

Figur 3 den Aufbau einer Verbundfolie gemäss einem dritten Ausführungsbeispiel, aus welchem ein auf einer Seite mit einem Lack und ein auf der anderen Seite mit einer Kunststoffolie beschichteter Triplex-Verbund zu ersehen ist.

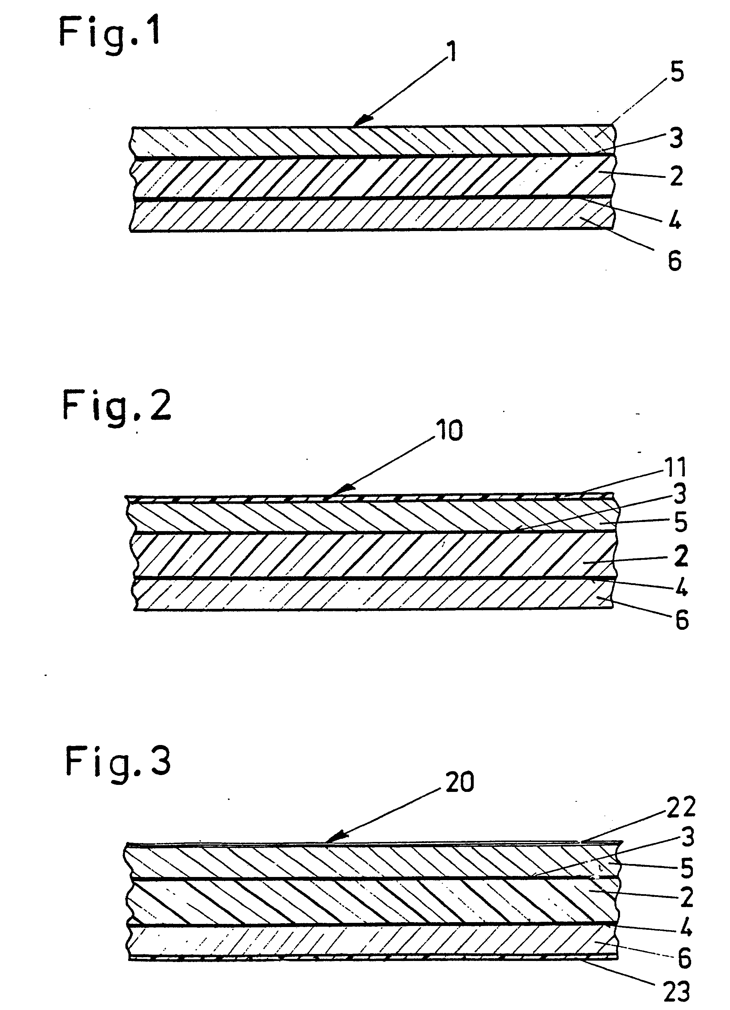

Gemäss dem in der Figur 1 gezeigten ersten Ausführungsbeispiel besteht die Metall-Kunststoffverbundfolie 1 aus einer Kunststoff-Kernschicht 2, welche beidseitig jeweils über eine haftvermittelnde Zwischenschicht 3 und 4 mit einem Metall-Dünnband 5 bzw. 6 beispielsweise einem Dünnband aus Aluminium, verbunden ist.

Die plastisch verformbare Kunststoff-Kernschicht 2 besteht beispielsweise aus einem Polyethylenterephthalat (PETP), einem Polybutylenterephthalat (PBT), einem Polyamid 6, einem Polyamid 6,6, einem Polypropylen oder einem Polycarbonat, also aus einem Thermoplast, der in Form einer Folie biaxial verstreckt bzw. orientiert worden ist.

Für die beiden Zwischenschichten 3 und 4 wird ein haftvermittelnder Kaschierkleber verwendet, welcher der Verbindung der beiden Metall-Dünnbänder 5 und 6 mit der Kunststoffolie 2 dient und eine Scherfestigkeit von mindestens 0,3 N/mm² aufweist.

Als Kaschierkleber können beispielsweise solche auf der Basis von Polyester — oder Polyether-Urethanen, Polyurethan-Epoxi-Kombinationen, amin — oder aminoamid-gehärtete Epoxi-Harze sowie modifizierte Phenoplaste verwendet werden. Zur Vorbehandlung der verstreckten Kunststoffolie 2 für die Laminierung ist es zweckmässig, sie in bekannter Weise einer Funkenentladung (Corona-Behandlung) zu unterziehen.

Die die Kernschicht 2 des sogenannten Triplex-Verbundes 1 bildende Kunststoffolie weist eine Reissdehnung in einem Bereich zwischen 40-180 % auf. — Entsprechend der Dicke und den gewünschten Eigenschaften des für den Verbund zum Einsatz gelangenden Metall-Dünnbandes 5 oder 6 wird eine Kunststoff-Kernschicht 2 verwendet, deren Kraftaufnahme bei der Dehnung der Verbundfolie grösser ist als die Kraftaufnahme jedes einzelnen Metall-Dünnbandes. — Das gesamte Dickenverhältnis der beiden Metall-Dünnbänder 5 und 6 zur Dicke der Kunststoff-Kernschicht 2 beträgt hier 4 : 1 bis 1 : 1, vorzugsweise 2,5 : 1 bis 1,5 : 1. Ergänzend ist zu erwähnen, dass für den gewünschten Verwendungszweck, das heisst zur Herstellung von Behältern besonders gut die Verwendung von weichen oder halbharten Aluminium-Dünnbändern geeignet ist.

Gemäss dem in der Figur 2 gezeigten zweiten Ausführungsbeispiel unterscheidet sich die Metall-Kunststoffverbundfolie 10 von der in der Figur 1 gezeigten Metall-Kunststoffverbundfolie 1 des ersten Ausführungsbeispieles im wesentlichen durch die zusätzliche Anordnung einer auf der späteren Innenseite eines nicht dargestellten Behälters zugewandten Metall-Deckschicht 5 oder 6 aufgebrachten Kunststoffolie oder aufgetragenen Lackes 11, welche im Hinblick auf ihre Beschaffenheit dem Füllgut des Behälters bzw. der Aggressivität des Füllgutes angepasst ist. — Bezüglich der Beschaffenheit der aufgebrachten Kunststoffolie bzw. des aufgetragenen Lackes ist besonders zu beachten, dass diese einen niedrigeren Erweichungsbereich als die zwischen den beiden Metall-Dünnbändern 5 und 6 befindliche Kunststoffolie 2 haben müssen, um ein Siegeln bei Temperaturen zu ermöglichen, die die Orientierung der verstreckten Folie nicht aufheben.

Anstelle der Kunststoff- oder Lackschicht 11 kann auch partiell ein « Hotmelt » auf einer Seite des Verbundes 10 aufgetragen werden, um beispielsweise mit Hilfe desselben die Verbindung von später aus dem Verbund hergestellten Behälterteilen bewerkstelligen zu können.

Gemäss dem in der Figur 3 gezeigten dritten Ausführungsbeispiel unterscheidet sich die Metall-Kunststoffverbundfolie 20 von den in den Figuren 1 und 2 gezeigten Metall-Kunststoffverbundfolien 1 und 10 des ersten und des zweiten Ausführungsbeispieles im wesentlichen durch jeweils beidseitig der Metall-Kunststoff-Verbundfolie 20 aufgetragene Schichten 22 und 23, und zwar einerseits durch eine auf einer der späteren Innenseite eines nicht dargestellten Behälters zugewandten Metall-Deckschicht 6 aufgetragene Kunststoffschicht 23 und andererseits durch eine auf der späteren Aussenseite des Behälters aufgetragene Lackschicht 22.

Die Kunststoffschicht 23 ist siegelbar und kann jeweils auch in einer nicht dargestellten Weise auf ein einseitig mit einem Phenol-Epoxi-Lack von 1-3 g/m² Trockenauflage vorbehandeltes Metall-Dünnband 5 oder 6 durch Extrusion aufgetragen werden. — Eine derart siegelbare Kunststoffschicht besteht aus einem Polyamid 11 oder einem Polyamid 12 und weist vornehmlich eine Dicke in einem Bereich von 20 bis 100 μm auf.

Mit Hilfe der erfindungsgemässen Metall-Kunststoffverbundfolie ist es nunmehr vorteilhafterweise möglich geworden, verhältnismässig leichte, grossvolumige Behälter mit einem Füllgewicht bis zu ca. 30 kg im Kaltformverfahren durch Tiefziehen oder Tiefen herzustellen. — Aus solchen Verbunden hergestellte Behälter sind besonders widerstandsfähig gegen Bruch und Leckage und können im bekannten Siegelverfahren geschlossen bzw. zusammengefügt werden.

**Ansprüche**

1. Metall/Kunststoff-Verbundfolie mit einer Kernschicht aus verstrecktem Kunststoff sowie beidseits auf diese unter Bildung einer Zwischenschicht kaschierten Schichten aus jeweils einem Metall-Dünnband zur Herstellung von durch bekannte Siegelverfahren verschliess- bzw. zusammenfügbaren grossvolumigen Leichtbehältern durch Tiefziehen oder Tiefen, dadurch gekennzeichnet, dass die plastisch verformbare, verstreckte bzw. orientierte Kernschicht (2) eine Reissdehnung von 40 bis 180 % aufweist, die beidseits der Kernschicht vorgesehenen Zwischenschichten (3, 4) jeweils mit einer Scherfestigkeit von mindestens 0,3 N/mm² versehen sind, und dass die Kraftaufnahme der Kernschicht bei Dehnung der Verbundfolie grösser ist als die Kraftaufnahme jedes der auf sie flächig aufgebrachten Metall-Dünnbänder (5, 6).

2. Verbundfolie nach Anspruch 1, dadurch gekennzeichnet, dass die Dicke der Metall-Dünnbänder (5, 6) zusammen zur Stärke der Kernschicht (2) ein Verhältnis von 4 : 1 bis 1 : 1, bevorzugt 2,5 : 1 bis 1,5 : 1, aufweist.

3. Verbundfolie nach Anspruch 1 oder 2, dadurch gekennzeichnet, dass sie, ausgehend von der flachen Bahn durch Tiefen zu Behältern oder Behälterteilen bis zu einem Verhältnis von 3 : 1 — Durchmesser : Tiefe — umformbar ist.

4. Verbundfolie nach einem der Ansprüche 1 bis 3, dadurch gekennzeichnet, dass die durch Extrusion auf das Metall-Dünnband aufgetragene siegelbare Deckschicht (23) aus einem Polyamid besteht.

5. Verbundfolie nach einem der Ansprüche 1 bis 3, dadurch gekennzeichnet, dass sie auf einer Seite mit einer Kunststoffschicht (21) und auf der anderen Seite mit einer Lackschicht (22) beschichtet ist.

6. Verbundfolie nach wenigstens einem der Ansprüche 1 bis 3, dadurch gekennzeichnet, dass sie auf einer Seite zumindest teilweise mit einem Hotmelt versehen ist.

## Claims

1. Metal-plastics composite foil having a core layer of stretched synthetic plastics material and layers, each of a thin metal strip, laminated on to the core layer, with formation of an intermediate layer, for the production of light-weight containers of large volume, which are sealable or assemblable by known sealing processes, by deep-drawing or deepening, characterised in that the plastically deformable, stretched or orientated core layer (2) possesses a tear elongation of 40 to 180 %, the intermediate layers (3, 4) provided on both sides of the core layer are each provided with a shear strength of at least 0.3 N/mm², and in that the force absorption of the core layer in stretching of the composite foil is greater than the force absorption of each of the thin metal strips (5, 6) applied flat to it.

2. Composite foil according to Claim 1, characterised in that the thickness of the thin metal strips (5, 6) together possesses a ratio of 4 : 1 to 1 : 1, preferably 2.5 : 1 to 1.5 : 1, to the thickness of the core layer (2).

3. Composite foil according to Claim 1 or 2, characterised in that, starting from the flat web, it is reshapable by deepening into containers or container parts up to a diameter : depth ratio of 3 : 1.

4. Composite foil according to one of Claims 1 to 3, characterised in that the sealable cover layer (23) applied by extrusion on to the thin metal strip consists of a polyamide.

5. Composite foil according to one of Claims 1 to 3 characterised in that it is coated on one side with a synthetic plastics layer (23) and on the other side with a layer (22) of lacquer.

6. Composite foil according to at least one of Claims 1 to 3 characterised in that it is provided on one side, at least in parts, with a hot-melt.

## Revendications

1. Feuille composite métal/matière plastique comportant une couche de noyau en matière plastique étirée et sur les deux faces de celle-ci des couches appliquées en doublage avec formation d'une couche intermédiaire, consistant chacune en un feuillard métallique mince, pour la fabrication par emboutissage ou emboutissage profond de récipients légers à gros volume pouvant être assemblés et fermés par des techniques connues de soudure, caractérisée en ce que la couche de noyau (2) apte au formage plastique, étirée ou orientée, présente un allongement à la rupture de 40 à 180 %, les couches intermédiaires (3, 4) prévues sur les deux faces de la couche de noyau ont chacune une résistance au cisaillement d'au moins 0,3 N/mm², et la capacité d'absorption des forces de la couche de noyau à l'allongement de la feuille composite est supérieure à celle de chacun des feuillards métalliques minces (5, 6) appliqués à la surface de cette couche.

2. Feuille composite selon la revendication 1, caractérisée en ce que l'épaisseur totale des feuillards métalliques minces (5, 6) est à un rapport de 4 : 1 à 1 : 1, de préférence de 2,5 : 1 à 1,5 : 1, avec l'épaisseur de la couche de noyau (2).

3. Feuille composite selon la revendication 1 ou 2, caractérisée en ce que, partant de la pièce continue à plat, cette feuille peut être déformée par emboutissage jusqu'à un rapport diamètre/profondeur de 3 : 1 pour la fabrication de récipients ou pièces de récipients.

4. Feuille composite selon une des revendications 1 à 3, caractérisée en ce que la couche de couverture (23) apte à la soudure appliquée par extrusion sur le feuillard métallique mince consiste en un polyamide.

5. Feuille composite selon l'une des revendications 1 à 3 caractérisée en ce qu'elle est revêtue sur une face d'une couche de matière plastique (23) et sur l'autre face d'une couche de vernis (22).

6. Feuille composite selon une au moins des revendications 1 à 3 caractérisée en ce qu'elle porte sur une face, en partie au moins, un Hotmelt.

Fig.1

Fig.2

Fig.3